(19)

**Europäisches Patentamt**

**European Patent Office**

**Office européen des brevets**

(11) **EP 1 533 969 A1**

(12) **EUROPEAN PATENT APPLICATION**

(43) Date of publication:
**25.05.2005 Bulletin 2005/21**

(51) Int Cl.7: **H04L 29/06**

(21) Application number: **03026879.1**

(22) Date of filing: **24.11.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(71) Applicant: **MATSUSHITA ELECTRIC INDUSTRIAL CO., LTD.**
**Kadoma-shi, Osaka 571-8501 (JP)**

(72) Inventors:
• **Rey, José Luis**
  **64287 Darmstadt (DE)**
• **Hakenberg, Rolf**
  **64295 Darmstadt (DE)**

(74) Representative: **Grünecker, Kinkeldey, Stockmair & Schwanhäusser Anwaltssozietät**
**Maximilianstrasse 58**
**80538 München (DE)**

(54) **Loss reporting for packet-switched streaming services using loss RLE report blocks**

(57) The present invention relates to a method, communication terminal, a streaming server and a communication system for providing feedback for data packets of a streaming session from a client to a streaming server to enable a target number of retransmissions for each data packet within a client buffering time defining a time interval during which a data packet is stored in a buffer at the client before being processed. The at least one streaming session is provided using a RTP protocol and the RTCP protocol, wherein a fraction of the available bandwidth is allocated to RTCP packets. To specify method how compressible and detailed report blocks may be tailored to different streaming client and server implementations the present invention gradually reduces the data included in a RLE Report Block based on different mechanisms to fulfill the RTCP bandwidth constraint and to enable a target number of retransmissions for each RTP packet.

Fig.3

EP 1 533 969 A1

**Description**

**Field of the Invention**

The present invention relates to a method for providing feedback for data packets of at least one streaming session from a client to a streaming server to enable a target number of retransmissions for each data packet within a client buffering time defining a time interval during which a data packet is stored in a buffer at the client before being processed. The at least one streaming session is provided using a RTP protocol and the RTCP protocol, wherein a fraction of the available bandwidth is allocated to RTCP packets. Further the present invention relates to a communication terminal, a streaming server and a communication system performing the method.

**Background Art**

The 3GPP (3rd Generation Partnership Project) adopts IETF (Internet Engineering Task Force) standardized protocols like RTP, UDP, IP for the transport and packet-switch codecs like AMR (Adaptive Multi-Rate) and H.264 (MPEG 4 part 10) for encoding media. The 3GPP Packet Switched Streaming Services (see "Universal Mobile Telecommunications System (UMTS); Transparent end-to-end streaming service; Protocols and codecs", 3GPP TS 26.234 version 5.6.0 Release 5, September 2003, available at http://www.3gpp.org) use the RTP/UDP protocol stack to stream audio/video/text media.

RTP is a Real-Time Transport Protocol (see Schulzrinne et al., "RTP: A Transport Protocol for Real-Time Applications", RFC 3550, July 2003, all IETF RFCs and Internet Drafts available at http://www.ietf.org) which is mainly used for real-time or near real-time communication, i.e. communication with relaxed delay constraints. It provides information on the timing of the media it carries and also allows re-ordering and re-assembling at the receiver.

An integrated part of the protocol is RTCP (Real Time Control Protocol) which provides minimal reception information and loose group membership. RTP is generally used together with the RTP/AVP profile (see Schulzrinne et al., "RTP Profile for Audio and Video Conferences with Minimal Control", RFC 3551, July 2003) which defines the use of the RTP header fields and mapping tables for payload types, besides simple RTCP feedback timing rules. The RTCP protocol is allocated a fraction of the available RTP bandwidth in order to compete with TCP/IP based traffic in a fair manner.

UDP (Postel, "User Datagram Protocol", RFC 768, August 1980) is the User Datagram Protocol used to transport RTP packets. UDP is commonly used when an unreliable communication is appropriate for the given media, as is the case for streaming applications. The protocol stack RTP/UDP is used because the timing constraints of the media don't usually allow reliable communication, e.g. by using TCP (Transmission Control Protocol).

In RTP, packetization schemes (payload formats) for existing media formats (codecs) are specified in the Internet Engineering Task Force Audio/Video Transport Working Group (IETF AVT WG). There is, for example, a payload format for AMR encoded speech data, and another one for H.264 video. A RTP payload format defined in Rey et al., "RTP Retransmission Format", Internet Draft, IETF AVT Workgroup, August 2003, also allows for retransmission of RTP packets in this framework. This may especially useful for 3GPP PSS streaming services.

As specified in by Rey et al. in "RTP Retransmission Payload Format" the mechanism for issuing multiple retransmissions relies on the client issuing the request only when needed. The client must use the feedback possibilities specified in "Extended RTP Profile for RTCP-based Feedback (RTP/AVPF)" (see Ott et al., "Extended RTP Profile for RTCP-based Feedback (RTP/AVPF)", Internet Draft, IETF AVT Workgroup, June 2003). Other reporting blocks, such as those defined by Friedman et al. in "RTP Control Protocol Extended Reports (RTCP XR)" (see RFC 3611, November 2003) may also be used.

The frequency of reporting may be calculated using the standard RTCP report interval calculation in RFC 3551. The coverage of the receiver reports, i.e. how many packets are reported, is not specified. The client uses General NACK (Negative ACKnowledgement) feedback messages as specified in the RTP/AVPF profile. Furthermore, the client can issue also General ACK (ACKnowledgement) messages to acknowledge those packets received. These message formats (ACKs and NACKs) are not compressed and cannot be directly combined, so that overhead increases as the initial fields shall be repeated when both are combined. No provision for comprehensive reporting e.g. by using RLE reports is made.

Furthermore, the Loss RLE Reports as defined in RFC 3661 are enhanced reporting blocks, which are compressible and combine ACKs and NACKs per default. However, Loss RLE Report Blocks are specified and recommended for use in multicast streaming only. These reports have been specified for network maintenance purposes, multicast tree inference and statistics gathering. Further, it is noted that these reports should not be used to trigger retransmissions.

A third document that deals with RLE Loss Reports and unicast RTCP reporting is the 3GPP Packet Switched Streaming Services (PSS) framework. According to this document it is required that streaming clients should implement the usage of Loss RLE Report blocks and report in a redundant manner over past RTCP intervals. Redundant in this context, redundant reporting may also be understood as enabling a minimum number of retransmissions for data packets prior to their processing. There is, however, no specification as to how this mechanism should be implemented at the client and how this mechanism should be used together with RTP Retransmission.

The multiple retransmission algorithm described by Rey et al. uses (or might make use of) message formats defined in the AVPF draft by Ott et al:, i.e. General ACKs and General NACKs. These message formats are not compressible and cannot be mixed in a same report block, so that two different report blocks shall contain ACKs on the one side and NACKs on the other, practically doubling the overhead. This means, that if both received and not received packets shall be reported, as recommended by 3GPP PSS, these report blocks can build up to a considerable overhead, such that the reserved bandwidth allocated to RTCP might not be sufficient to report over the required amount of time to guarantee continuous play-out and/or redundancy of the reports as required.

**Summary of the Invention**

The object of the present invention is therefore to specify method how compressible and detailed report blocks may be tailored to different streaming client and server implementations.

The object of the present invention is solved by the subject-matters of the independent claims. Preferred embodiments are subject matter to the dependent claims.

In particular, one embodiment of the present invention provides a method for providing feedback for data packets of at least one streaming session from a client to a streaming server to enable a target number of retransmissions for each data packet within a client buffering time defining a time interval during which a data packet is stored in a buffer at the client before being processed. The at least one streaming session may be provided using a RTP protocol and the RTCP protocol, wherein a fraction of the available bandwidth may be allocated to RTCP.

In a first step, the actual number of retransmissions for a data packet may be based on said client buffering time and a feedback interval depending on a feedback message size. If it is determined that the actual number of retransmissions is smaller than the target number of retransmissions, reducing the size of a feedback message may be successively carried out using different means as outlined in the following until the actual number of retransmissions coincides with the target number of retransmissions.

If the size of the feedback message could be sufficiently reduced to fulfill the criterion outlined above, the feedback message of reduced size may be transmitted to the streaming server.

According to the method of this embodiment, the streaming session is a unicast streaming session and the feedback message is a Loss RLE Report Block.

The size of the feedback message may be reduced by limiting the number of data packets for which feedback is provided to a subset of a theoretical number of data packets on which feedback should be provided, i.e. on a subset of data packets associated to an interval defined by the client buffering time. Further, the feedback message may provide feedback for the subset of a theoretical number of data packets.

When determining the actual number of retransmissions, the theoretical number of data packets on which feedback should be provided in at least one feedback message may be determined either based on the client buffering time and the data packet rate at which data packets are received by the client, or on sequence numbers of data packets in the buffer. For an initial determination of the theoretical number of data packets the first variant may be of interest.

The feedback message size may be determined based on the number of data packets to provide feedback for. Further, the feedback interval may be determined based on the feedback message size and the bandwidth fraction allocated to the RTCP protocol, wherein the feedback message defines a time interval between the transmissions of feedback messages. The feedback interval may correspond to the RTCP report interval.

In a further embodiment of the present invention, a run length compression of the feedback message may be performed before determining its size. A run length compression reduces the size of the data and therefore the message size such that it may be performed each time when having reduced the size of the feedback message to enable a target number of retransmissions for data packets, i.e. to provide a required level of redundancy.

Another embodiment of the present invention specifies a means to reduce the size of the feedback message, i.e. the Loss RLE Report Blocks. First, it may be determined whether a data packet has been lost based on sequence numbers of data packets received at the client. Next, a timestamp for a lost data packet may be estimated by a linear interpolation of timestamps of successfully received data packets.

The step of reducing the feedback message size may comprise including only information related to data packets of which the timestamp is within a time window defining a time interval of said client buffering time to the feedback message. Hence, this means may be applicable to reduce the number of packets on which is reported not only for successfully received data packets but also for lost data packets for which a timestamp is estimated. Further, this means may allow reporting only on a subset of data packets, e.g. a subset comprising the recently received data packets for which a required level of redundancy may be provided.

In another embodiment, the time window may be chosen to be at least equal to the feedback interval times the target number of retransmissions. Thus, by defining a minimum size for the time window, it may be ensured that the target number of retransmissions for lost data packets may be provided.

In the previous embodiment, the time window has been specified by the client. According to another embodiment, the streaming server may transmit the size of a time window to the client. Hence, information indicating a time window may be received from the streaming server, wherein the time window may define a time interval for which the streaming server keeps data packets in a buffer for data retransmissions. According to this embodiment, the feedback message size may be reduced by including only information related to data packets of which the timestamp is within a time window indicated by said streaming server. Thus, the client may decide whether to report on a lost data packet considering whether the streaming server would still have stored the requested data packet in a buffer and would be capable of initiating a retransmission.

Another possibility to reduce the number of data packets to report is specified in the following embodiment of the present invention. The round-trip time between the streaming server and the client may be estimated first. Next, it may be determined whether a lost data packet would still be comprised in the client's buffer at the time, at which a retransmission of the lost data packet would be expected by the client based on an estimated timestamp of the lost data packet and the estimated round-trip time. Reducing the feedback message size may be accomplished by including only information related to the lost data packet to said feedback message if the lost data packet would be comprised in the client's buffer at the expected time. According to this embodiment, the client may calculate first, whether a retransmission of a data packet would arrive prior to its read-out time from the client's buffer, before reporting on said packet.

Another embodiment of the present invention related to streaming services providing a streamed session comprising a basic data layer providing a basic streaming media quality and at least one enhancement layer enhancing the basic streaming media quality. This may for example apply to the streaming of MPEG video data.

In this embodiment, the feedback message size may reduced by including only information related to data packets that comprise data of said basic data layer to said feedback message.

More particularly, the data of the at least one streaming session may be an MPEG stream and the basic data layer may comprise I-frames and the at least one enhancement layer may comprise P-frames and/or B-frames.

Whether a lost data packet comprises data of the basic data layer may e.g. be determined based on data packets already received at the client.

In a further embodiment of the present invention the method may be performed by the client upon receiving session setup information and prior to receiving the first media data of a streamed service. Hence, the client may determine in the initialization of a streaming session, whether the bandwidth fractions used for streaming suggested by the streaming server will be sufficient to provide a required level of redundancy.

If it is not possible to reduce the feedback message size to a size resulting in an actual number of retransmissions larger or equal to the target number of retransmissions, i.e. it is not possible to reach a required level of redundancy, the client may reconfigure the at least one streaming session, e.g. suggesting to use a large bandwidth fraction or to reduce the packet rate.

A MIME type parameter of the streamed session may thereby indicates the packet rate intended to be used for the streaming session by the streaming server.

Another embodiment of the present invention provides a communication terminal providing feedback for data packets of a streaming session from the communication terminal to a streaming server to enable a target number of retransmissions for each data packet within a communication terminal's buffering time defining a time interval during which a data packet is stored in a buffer at the communication terminal before being processed. The at least one streaming session may be provided using a RTP protocol and the RTCP protocol, a fraction of the available bandwidth being allocated to RTCP packets.

The terminal may comprise a processing for determining the actual number of retransmissions for a data packet based on a feedback interval dependent on a feedback message size and said client buffering time. If the processing means determines that the actual number of retransmissions is smaller than the target number of retransmissions, the processing means may reduce the size of a feedback message until the actual number of retransmissions coincides with the target retransmission number. Further, the terminal may comprise transmission means for providing the feedback message of reduced size to the streaming server.

According to this embodiment of the present invention, the streaming session is delivered using unicast and the feedback message is a Loss RLE Report Block.

The communication terminal may be especially adapted to perform of the method according to its different embodiments outlined above.

Moreover, the present invention also provides a streaming server receiving feedback for data packets of a unicast streaming session from a communication terminal to the streaming server to enable a target number of retransmissions for each data packet within a communication terminal's buffering time defining a time interval during which a data packet is stored in a buffer at the communication terminal before being processed. Again the at least one streaming session may be provided using a RTP protocol, the RTCP protocol and feedback messages, a fraction of the available bandwidth being allocated to RTCP packets.

The streaming server may comprise transmission means for transmitting information on a time window defining a time interval for which the streaming server keeps streaming session related data packets in a buffer for data retransmissions may be especially adapted to perform the method according to one of the different embodiments thereof.

Further, another embodiment of the present invention provides a communication system comprising a streaming server providing streamed data in data packets to the communication terminal using a RTP protocol, and communication terminal according to providing feedback to the streaming server. The streaming server of the communication system may further be adapted according to the features the method outlined above.

**Brief Description of the Figures**

In the following the present invention is described in more detail in reference to the attached figures and drawings. Similar or corresponding details in the figures are marked with the same reference numerals.

**Fig. 1** shows an overview of a streaming environment according to an embodiment of the present invention,

**Fig. 2** shows the relationship between the client buffering time, the RTCP report period and a minimum time period required to provide a target level of redundancy according to an embodiment of the present invention, and

**Fig. 3** shows a flow chart for controlling feedback provided from a client to a streaming server according to an embodiment of the present invention.

**Detailed Description**

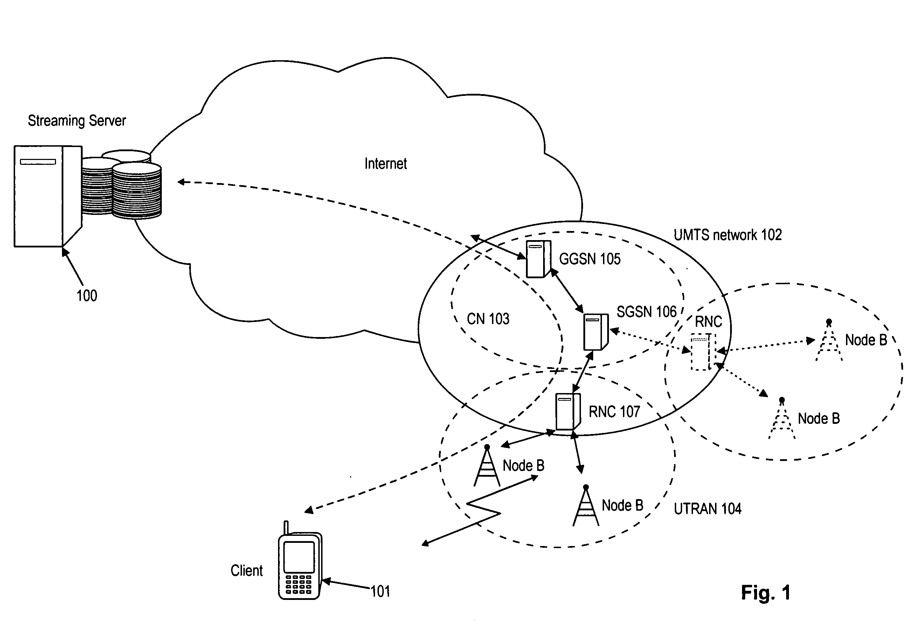

Fig. 1 shows an overview of a streaming environment according to an embodiment of the present invention. A streaming server 100 may deliver a streaming service in form of one or multiple sessions via a wireless access network to the client 101 or mobile terminal. In the example a UMTS network comprising a core network 103 (CN) and a UMTS radio access network 104 (UTRAN) provides the streamed packet switched service, which may be operated according to the requirements as defined in 3GPP TS 26.234. To connect the core network 103 to a packet switched network, e.g. the Internet, the core network may comprise a gateway GPRS support node 105 (GGSN) and a serving GPRS support node 106 (SGSN). The core network's components may be connected to the UTRAN 104 comprising at least one radio access controller 107 (RNC) and at least one Node B connected to a RNC. The data of the streamed media may be provided to a mobile client 101 via a wireless link.

One aspect of the present invention is to efficiently use Loss RLE Report Blocks for loss reporting in different RTP retransmission implementations. Such implementation typically differ in the functionalities that server and client carry out, the information both use to schedule/request retransmissions and the knowledge that they have about the network conditions (congestion, packet losses, link characteristics). The 3GPP PSS streaming services define session description attributes, which may or may not be used to make these information available between communicating peers.

For all RTP retransmission implementations the same initial scenario and requirements may be assumed: The client should perform redundant reporting as RTCP transport is unreliable and so could RLE Loss Reports be lost. Further, the client should report at least over the period between the current report and the last report: guarantee minimum receiver reporting.

The report frequency should be sufficiently high to allow for timely retransmission; guarantee a minimum number of retransmissions for each RTP packet and the client may limit its report frequency, report block size and redundant reporting to comply with the RTCP bandwidth signaled by the server.

As some of these requirements are competing and it might not be possible to fulfill them simultaneously in every scenario, the client may optimize the level of redundant reporting, the reporting frequency and the number of reported RTP packets for the given conditions.

This could mean, for example, that in an simple implementation the client will report about all lost packets between the current RTCP report and the last RTCP report, set the level of redundant reporting to an reasonable value and keep the RTCP report frequency as high as possible to allow for a maximum of timely retransmissions. It should be noted that RTP packets on the downlink (server to client) may be lost multiple times and may therefore require multiple retransmissions.

If this simple implementation should not comply with the requirement to limit the report frequency, report block size and redundant reporting to comply with the signaled RTCP bandwidth, the client may first try to reduce the report block size by run length encoding and then to minimize the number of reported RTP packets, e.g. pulling out first the newer ones. If this is not sufficient the client may next reduce the level of redundant reporting, i.e. the times a packet is reported. If this is still not sufficient the client should apply thinning, i.e. not reporting all packets between the current RTCP report and the last RTCP report.

For example, the Loss RLE Report Block permits detailed reporting upon individual packet receipt and loss events. Such reports can be used, for example, for multicast inference of network characteristics (MINC). Since a Boolean trace of lost and received RTP packets is potentially lengthy, this block type may permit the trace to be compressed through run length encoding. When using run length encoding, the trace to be encoded is analyzed and "runs" of identical events may be summarized to reduce the overall size of the Loss RLE Report Block.

To further reduce block size, loss event reports can be systematically dropped from the trace in a mechanism called thinning. The thinning mechanism may be implemented by choosing a thinning value, T, which may be used to select a subset of packets within the sequence number space: those with sequence numbers that are multiples of 2T. Packet reception and loss reports apply only to those packets. T may e.g. vary between 0 and 15. If T is zero, then every packet in the sequence number space is reported upon. If T is fifteen, then one in every 32,768 packets is reported upon. Suppose that the trace just described begins at sequence number 13,821. The last sequence number in the trace is 13,865. If the trace were to be thinned with a thinning value of T=2, then every fourth sequence numbers would be reported upon: 13,824, 13,828, 13,832, 13,836, 13,840, 13,844, 13,848, 13,852, 13,856, 13,860, 13,864

The initial phase of a PSS streaming service is when the client requests a certain server a description about the details of the session offered. Upon the client's request, the streaming server may send a session description. In this session description the following parameters may be made known to the client - note that only parameters which may be relevant for this invention are listed: A MIME Type of the codec used for the media session: e.g. H263, AMR, MPEG4, etc.

Further, optionally MIME Type parameters that described the codec may be included. These parameters may be used to calculate other values of the stream such as the packet rate. Another important parameter in the session description may be the RTCP bandwidth share, *rtcp_bandwidth*, for the receiver reports. The default bandwidth share for unicast streaming applications such as those targeted by the PSS specification is 50% of the total RTCP bandwidth for each, sender and receiver. Another value may be explicitly specified using the method proposed by Casner in "Session Description Protocol (SDP) Bandwidth Modifiers for RTP Control Protocol (RTCP) Bandwidth" (see RFC 3556, July 2003).

Optionally the maximum RTCP packet size that a client may use can be specified in the session description. According to the 3GPP PSS specifications it is possible to limit the RTP (not RTCP) packet size of a server. Similar limitations may be possible for RTCP report packets.

Another important parameter that may be considered when trying to ensure a required level of redundancy for the transmission of RTP packets may be the client buffering time. The client buffering time may be understood as the time a client decides to store the received the packets in its own buffer before starting to read out and process the data. Regarding the client buffering time (*client_buffering_time*) there may be two possible scenarios: The first possibility is that the client does not support bit-rate adaptation as defined in the PSS specification. In this case the *client_buffering_time*, may be set to the initial buffering time, i.e. the time after which the client starts reading out the packets of the buffer at session start.

The other possibility is that the client supports bit rate adaptation. In this case the parameter "buffer size", which is signaled in the "3GPP-Adaptation" header may be available to the streaming server. It may correspond to a reception and de-jittering buffer in the client that has this given amount of space for complete RTP packets including the RTP header. The parameter may define a maximum size of data the client may have available at any given moment.

The target protection time, may also be signaled in the "3GPP-Adaptation" header in the "target-time" parameter. This may be the targeted minimum buffer level or, in other words, the client desired amount of playback time in milliseconds to guarantee interrupt-free playback and allow the server to adjust the transmission rate, if needed. This parameter may e.g. be used as the client buffering time, *client_buffering_time.*

Once the client has received the session description information it may calculate whether or not the signaled RTCP bandwidth share allows reporting over the intended client buffering time for the given media stream. For this calculation the client may use the default algorithm described below.

The client may need to determine find out what is the size of the RLE Loss Report needed to a) report all packets in the client buffer, b) enable a pre-set number of packet retransmissions for every packet c) provide maximum redundancy, and d) comply with the given RTCP bandwidth for receiver reports, is.

In a first step the client may calculate the number of packets to report on in an RTCP report including the Loss RLE Report Block. Every time the client sends a new RTCP report, it may check the number of packets *n* in the buffer. This number may be calculated as

*n=HSN-LSN (highest sequence number-lowest sequence number).*

Alternatively, it may also be possible that the client is able to calculate the stream packet rate with the MIME parameters that are provided. E.g. this may be the case when using an AMR codec, where the different packet rates are explicitly indicated in the headers of data packets. In this case an alternative solution to is to calculate the theoretical number of packets to report on *n* as

*n=client_buffering_time / packet_rate.*

The next step may be to calculate the RTCP packet size. The general formula for calculation of the packet size, including IP and UDP headers, for the RTCP with RLE Loss Reports as a function of *n* is:

*rtcp_packet_size = 96 bytes + step (n,30) \* 4 bytes* (1)

where the *step*() is the mathematical step function that takes *n* and the constant 30 as parameters. For several values of *n*:

```
step(n,30) = 0 if      n<=0;
             1 if  1<=n<=30;
             2 if 31<=n<=60;
             3 if 61<=n<=90;
             ...
```

It should be noted that this increase happens step-wise. The reason for this is that the RTCP reports are 32-bit aligned and a whole 4-byte word has to be added whenever the number of packets to report (*n*) goes over a multiple of 30.
The RTCP report period may be calculated next by using the equation:

*rtcp_report_period=rtcp_bandwidth / rtcp_packet_size.*

RLE compression, i.e. a run-length compression of the report's data, may be done before calculating the *rtcp_report_period* or not depending on the strategy of the client. The formula above provides a conservative calculation of the redundancy obtained (worst case packet size needed for the *client_buffering_time*). Depending on whether the actual loss trace is available every time a feedback message is sent or not, the client may perform RLE compression of the trace and calculate the *rtcp_report_interval* with this compressed packet size or stay with the conservative calculation without employing compression.
Once the packet size and the RTCP report period is known the client may find out if a minimum or target number of retransmissions is enabled with this feedback bandwidth and packet size, when assuming that the reporting should allow a pre-set number of retransmissions for each RTP packet, *number_of_rtx*. In order to guarantee this minimum number of retransmissions, the next condition should be met:

*client-buffering-time/rtcp_report_period >= number_of_rtx* (2)

I.e., the number of RTCP reports in a period equal to the client buffering time shall be greater than this chosen value- The exact value of equation (2) indicates the *redundancy* of the reporting, i.e. how many times it may actually reported over a given packet within the client buffering time.
Only if the conditions above are met, the calculated *rtcp_packet_size* shall be further used since the allocated RTCP bandwidth in this case would be sufficient for redundant reporting.
If the condition is not met, or the client aims to optimize the reporting to achieve a higher level of redundancy or number of retransmissions the following means may be employed.

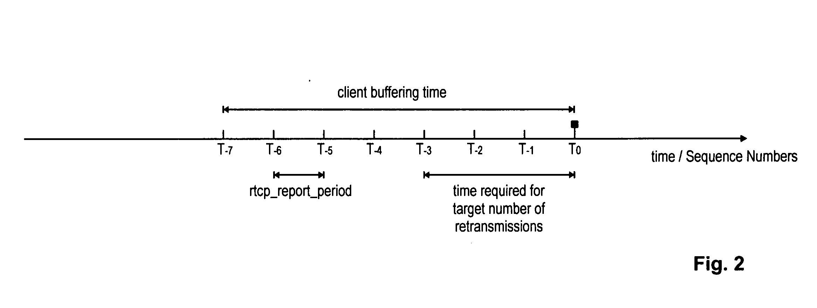

Fig. 2 shows the relationship between the client buffering time, the RTCP report period and a minimum time period required to provide a target level of redundancy according to an embodiment of the present invention. In the example, a fixed fraction of bandwidth is allocated to RTCP. In order to provide a certain level of redundancy, i.e. to enable a target number of packet retransmissions before the respective packet is further processed by the client, the client buffering time may be larger than the RTCP report interval *rtcp_report_interval.*

Hence, in case up to three retransmissions of a data packet should be enabled, the client has to report over the time interval between $T_0$ and $T_{-3}$ to ensure this level of redundancy. Thus the required redundancy defines a lower level for the time window about which the client has to report to enable - in our example - three retransmissions for each data packet before the client's buffer corresponding to the data packet is read out and further processed.

It should be noted that the RTCP report interval is directly proportional to the RTCP packet size, i.e. the size of a Loss RLE Report Block. When assuming that the client buffering time is large, which implies many packets to report on in a single Loss RLE Report Block, the required Loss RLE Report Block size will also increase. Hence, the larger report block size would enlarge the RTCP report interval, i.e. less feedback messages per time interval could be transmitted by the client.

Thus, it may happen that the time interval between $T_0$ and $T_{-3}$, which is three times the RTCP report interval in our example, becomes larger than the client buffering time. Hence, it would not be possible to provide the required level of redundancy in this case. Therefore, the present invention suggests to check, e.g. at session setup, whether the available RTCP bandwidth is sufficient for comprehensive reporting or not. If not the means as described in the following section may be used to reduce the Loss RLE Report Block size and thereby the RTCP report interval such that a certain level of redundancy may be provided.

Theoretically, it may also be considered to reduce the number of packets to report on in a RTCP report interval by enlarging the RTP packet size. However, this may not always be possible since generally the link between client and server may have a limited maximum transfer unit, so called path MTU and since the packets from a codec may not be simply reduced in size or fragmented as desired.

In the default algorithm described above the client may report some packets for a multiple times. In order to reduce the number of reported packets (n) and by this the rtcp_packet_size, the client may decide to drop some of this redundant reporting.

The client may also consider the buffering time at the server, if available. The streaming server may signal its buffering time (i.e. the time it keeps transmitted packets in a buffer for retransmission) by SDP using the "rtx-time" parameter defined in "RTP Retransmission Payload Format" by Rey et al. or other methods. If an estimated timestamp indicates that the packet is older than the oldest packet in the server buffer (e.g. the server buffer may be given in seconds), the client may drop the reporting of this packet. Note that in general the streaming server's and client's buffer amounts for the session may be different and there may be no a-priori negotiation of the buffer sizes. The server may set its buffer size to a value suggested by the client, in general, but a server may also signal this value to the client in order to accelerate the set-up phase of a streaming session.

Further, the client may consider its calculation the round-trip time and an estimation of the timestamp of lost data packets. The client may estimate the timestamp of a lost packet by a linear interpolation between the previous and last received packet. It should be noted that this may increase the complexity of client and server, as some type of reporting extensions have to be implemented by both to enable round-trip time estimation.

Another means to reduce the number of packets to report on and thereby the size of a Loss RLE Report Block may be to consider importance of a data packet. E.g. in progressive coding technologies such as MPEG-4 packets have different priorities. Less important packets, e.g. B-frames and P-frames, could be dropped in the reporting, while I-frames should be reported on.

Moreover, the current application level QoS (Quality of Service) and link level QoS may also be taken into account to reduce the Loss RLE Report Block size. If current application level QoS is sufficiently high and/or the link level QoS is low (i.e. congestion on the link), the client may decide to drop the reporting for some lost packets. For example, the MPEG4 codec implements advanced packet loss resilience measures: in some cases and depending on the content of the stream, it might well be the case that several packets were lost on the link, while the quality of the picture is not affected by these losses; in particular, if B-frames or P-frames are lost, the effect is minimum and the cost of a packet retransmission may be greater and so may the application decide to drop this packet.

All the means to reduce the packet size of a Loss RLE Report may be gradually employed until a specific level of redundancy required is reached.

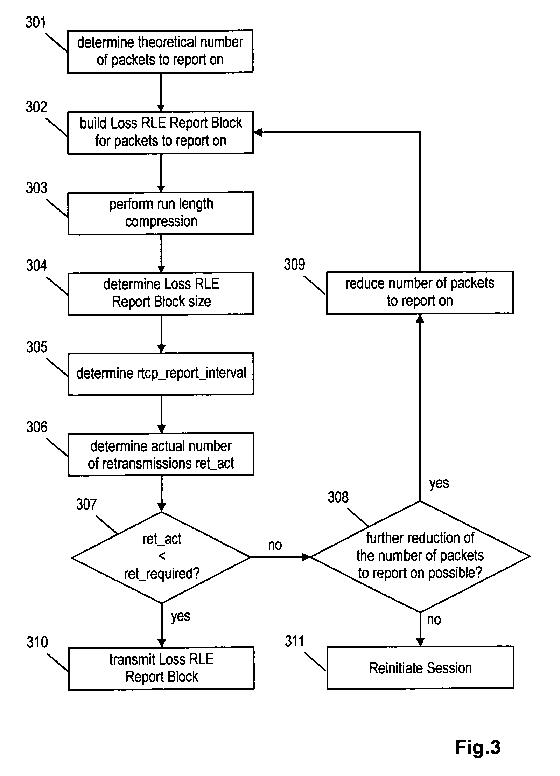

In the following sections an example process for providing feedback performed by the client will be discussed. Fig. 3 shows a flow chart for controlling feedback provided from a client to a streaming server according to an embodiment of the present invention.

In a first step the client may determine 301 the number of data packets, i.e. RTP packets it should report on in a single Loss RLE Report Block. This number *n* of packets may be calculated by the client as outlined above. Based on this result, the client may next build 302 a report block and - in an optional step - may perform 303 a run-length compression of the report block data.

Next the client may determine 30 4 the resulting report block size and dependent thereon the resulting RTCP report interval 305. Using this parameter as well as the client buffering time the client may calculate 306 the actual number of retransmissions, e.g. using equation (2) above, that may be enabled by the configuration.

In a next step, the client determines 307 whether the actual number of retransmissions *ret_act* is sufficient to provide the desired level of redundancy, represented as the quantity *ret_required.* If so, the built Loss RLE Report Block may be transmitted 310 to the streaming server.

If not, the method proposes may check 308 next, whether the size of the report block may be further reduced, i.e. whether all means for reducing the Loss RLE Report Block size have been exploited yet. If so, the client may reinitiate 311 the session, since the RTCP bandwidth share is not sufficient for providing the required redundancy for packet retransmissions in this case.

If not, the client may further try to reduce 309 the report block size by the means as outlined above. Hence, the blocks 302 to 309 in Fig. 3 may also be regarded as an iteration process successively reducing the size of the report block by use of different means as described above. In a first step, the client may successively try to limit the number of data packets to report to a subset of recently received data packets. The subset may be as small as indicated by the required level of redundancy times the RTCP report interval (see Fig. 2). In the "next" iteration step if required and assuming the streaming of MPEG data, the client may omit feedback for packets comprising B-frames and/or P-frames.

What should be noted however is, that the client may also have to reduce the level of redundancy below a required level instead of directly jumping to step 311 and to reinitiate the session with a larger RTCP bandwidth fraction.

Once the number of packets to report on has been reduced in step 309 a new report block may be built 302 and optionally run-length encoded 303. Again, the same calculations and processing as described above (see blocks 304 to 307) may be performed.

If it is determined in step 307 that the required redundancy may be provided the Loss RLE report block may be transmitted 310.

According to another embodiment of the present invention the principles and ideas described herein may be applied to 3GPP PSS unicast streaming services. The present invention has the advantage that it provides the 3GPP PSS framework with a straightforward mechanism for streaming servers and clients to specify the reporting using RLE Report blocks, i.e., how big should the reports be, how oft should they be sent and how many packets should they cover. Second, it defines a framework for specifying a wide spectrum of client configurations, such that from a most simple client to a full featured client can be set-up depending on which information is available at the client and how efficient the RLE Loss Report compression should be.

In a further embodiment of the present invention, the following requirements may be considered. 3GPP allows in 3GPP TS 26.234 for new possibilities of reporting that have not been taken into account the methods proposed by Rey et al. by adopting the new report block formats defined in RFC 3611. 3GPP TS 26.234 specifies the feedback timing rules and the report formats to be used in PSS streaming services. In particular the 5-second rule for RTCP reports from RFC 3551 may be abolished in all peers. The feedback frequency may be limited by the average RTCP packet size and the reserved RTCP bandwidth (using the standard RTP algorithm). The latter may optionally be set explicitly using a session description language like SDP and the corresponding format described in RFC 3556. 3GPP PSS services may support the report packet formats of the Enhanced RTCP Feedback Profile and should support the Loss RLE Report Block format for loss reporting. In this case, this embodiment of the present invention may require that both client and server understand the RLE Loss Report Blocks as defined in Section 4.1 of RFC 3611.

**Claims**

1. A method for providing feedback for data packets of at least one streaming session from a client (101) to a streaming server (100) to enable a target number of retransmissions for each data packet within a client (101) buffering time defining a time interval during which a data packet is stored in a buffer at the client (101) before being processed, wherein the at least one streaming session is provided using a RTP protocol and the RTCP protocol, a fraction of the available bandwidth being allocated to RTCP packets, and the method comprises the step of:

   determining (306) the actual number of retransmissions for a data packet based on said client (101) buffering time and a feedback interval depending on a feedback message size,

   if it is determined (307) that the actual number of retransmissions is smaller than the target number of retransmissions, reducing (309) the size of a feedback message until the actual number of retransmissions coincides with the target number of retransmissions,

transmitting (310) the feedback message of reduced size to the streaming server, and

wherein the streaming session is a unicast streaming session and the feedback message is a Loss RLE Report Block.

2. The method according to claim 1, wherein the size of the feedback message is reduced by limiting the number of data packets for which feedback is provided to a subset of a theoretical number of data packets on which feedback should be provided, and
wherein the feedback message provides feedback for the subset of a theoretical number of data packets.

3. The method according to claim 1 or 2, wherein the step of determining the actual number of retransmissions comprises

determining (301) the theoretical number of data packets on which feedback should be provided in at least one feedback message either based on the client (101) buffering time and the data packet rate at which data packets are received by the client, or on sequences numbers of data packets in the buffer,

determining (304) a feedback message size based on the number of data packets to provide feedback for, and

determining (305) the feedback interval based on the feedback message size and the bandwidth fraction allocated to the RTCP protocol, wherein the feedback message defines a time interval between the transmission of feedback messages.

4. The method according to claim 3, wherein the method further comprises the step of performing (303) a run length compression on the feedback message before determining the size of the feedback message.

5. The method according to one of claims 1 to 4, further comprising the step of determining whether a data packet has been lost based on sequence numbers of data packets received at the client.

6. The method according to one of claims 1 to 5, further comprising the step of estimating a timestamp by a linear interpolation of timestamps of successfully received data packets.

7. The method according to one of claims 1 to 6, wherein the step of reducing the feedback message size comprises including only information related to data packets of which the timestamp is within a time window defining a time interval of said client (101) buffering time to said feedback message.

8. The method according to one of claims 7, wherein the time window is at least equal to the feedback interval times the target number of retransmissions.

9. The method according to one of claims 1 to 8, further comprising the step of:

receiving information indicating a time window from the streaming server, said time window defining a time interval for which the streaming server (100) keeps data packets in a buffer for data retransmissions, and

wherein the step of reducing the feedback message size comprises including only information related to data packets of which the timestamp is within a time window indicated by said streaming server.

10. The method according to one of claims 1 to 9, further comprising the steps of:

estimating the round-trip time between the streaming server (100) and the client,

determining whether a lost data packet would still be comprised in the client's buffer at the time, at which a retransmission of the lost data packet would be expected by the client (101) based on an estimated timestamp of the lost data packet and the estimated round-trip time, and

wherein the step of reducing the feedback message size comprises including only information related to the lost data packet to said feedback message if the lost data packet would be comprised in the client's buffer at the expected time.

**11.** The method according to claim 1 to 10, wherein the data of the streamed session comprises a basic data layer providing a basic streaming media quality and at least one enhancement layer enhancing the basic streaming media quality,
wherein the step of reducing the feedback message size comprises including only information related to data packets that comprise data of said basic data layer to said feedback message.

**12.** The method according to claim 11, wherein the data of the at least one streaming session is an MPEG stream and the basic data layer comprises I-frames and the at least one enhancement layer comprises P-frames and/or B-frames.

**13.** The method according to claim 11 or 12, the method further comprising the step of determining whether a lost data packet comprises data of the basic data layer based on data packets already received at the client.

**14.** The method according to one of claims 1 to 13, wherein the method is performed by the client (101) upon receiving session setup information and prior to receiving the first media data of a streamed service.

**15.** The method according to one of claims 1 to 14, further comprising the step of reconfiguring the at least one streaming session if it is not possible to reduce the feedback message size to a size resulting in an actual number of retransmissions larger or equal to the target number of retransmissions.

**16.** The method according to one of claims 1 to 15, wherein a MIME type parameter of the streamed session indicates the packet rate.

**17.** A communication terminal (101) providing feedback for data packets of a streaming session from the communication terminal to a streaming server (100) to enable a target number of retransmissions for each data packet within a communication terminal's buffering time defining a time interval during which a data packet is stored in a buffer at the communication terminal before being processed, wherein the at least one streaming session is provided using a RTP protocol and the RTCP protocol, a fraction of the available bandwidth being allocated to RTCP packets, the communication terminal comprising:

   processing for determining (306) the actual number of retransmissions for a data packet based on a feedback interval dependent on a feedback message size and said client (101) buffering time,

   if the processing means determines (307) that the actual number of retransmissions is smaller than the target number of retransmissions, the processing means is adapted to reduce (309) the size of a feedback message until the actual number of retransmissions coincides with the target retransmission number, and

   transmission means for providing (310) the feedback message of reduced size to the streaming server, and

   wherein the streaming session is a unicast streaming session and the feedback message is a Loss RLE Report Block.

**18.** The communication terminal according to claim 17, wherein the communication terminal (101) is adapted to perform of the method according to one of claims 1 to 16.

**19.** A streaming server (100) receiving feedback for data packets of a unicast streaming session from a communication terminal (101) to the streaming server (100) to enable a target number of retransmissions for each data packet within a communication terminal's buffering time defining a time interval during which a data packet is stored in a buffer at the communication terminal before being processed, wherein the at least one streaming session is provided using a RTP protocol, the RTCP protocol and feedback messages, a fraction of the available bandwidth being allocated to RTCP packets, the streaming server (100) comprising

   transmission means for transmitting information on a time window defining a time interval for which the streaming server (100) keeps streaming session related data packets in a buffer for data retransmissions and

   wherein the streaming server (100) is adapted to perform the method according to one of claims 1 to 16.

**20.** A communication system comprising a streaming server (100) providing streamed data in data packets to the communication terminal (101) using a RTP protocol, and communication terminal according to claim 17 or 18 providing feedback to the streaming server.

21. The communication system according to claim 20, wherein the streaming server (100) is adapted according to the features of claim 19.

Fig. 1

**Fig. 2**

301 determine theoretical number
of packets to report on

302 build Loss RLE Report Block
for packets to report on

303 perform run length
compression

304 determine Loss RLE
Report Block size

309 reduce number of packets
to report on

305 determine rtcp_report_interval

306 determine actual number
of retransmissions ret_act

307 ret_act
<
ret_required?

no

308 further reduction of
the number of packets
to report on possible?

yes

yes

310 transmit Loss RLE
Report Block

no

311 Reinitiate Session

**Fig.3**

**European Patent Office**

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,A | J. REY, D. LEON, A. MIYAZAKI, V. VARSA, R. HAKEN BERG: "RTP Retransmission Payload Format" IETF INTERNET DRAFT DRAFT-IETF-AVT-RTP-RETRANSMISSION-09.TXT, [Online] August 2003 (2003-08), pages 1-26, XP002279287 IETF Retrieved from the Internet: <URL:http://www.ietf.org/internet-drafts/draft-ietf-avt-rtp-retransmission-10.txt> [retrieved on 2004-05-07] * Abstract * * paragraphs [0001]-[0004],[0006],[0008],[0010] * ----- | 1-21 | H04L29/06 |

TECHNICAL FIELDS
SEARCHED (Int.Cl.7)

H04L

The present search report has been drawn up for all claims

| Place of search | Date of completion of the search | Examiner |
|---|---|---|
| THE HAGUE | 11 May 2004 | Gavriliu, B-A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)